# EUROPEAN PATENT SPECIFICATION

(11) **EP 4 599 308 B1**
(45) Date of publication and mention of the grant of the patent: **25.11.2026**
(21) Application number: 23926617.4
(22) Date of filing: 29.12.2023
(51) Int. Cl.: G05G 9/047, G05G 1/04, G06F 3/0338, H01H 21/00, E02F 9/20

(54) **A FINGER JOYSTICK WITH LOCKABLE ANGLE VALUE**
FINGERJOYSTICK MIT VERRIEGELBAREM WINKELWERT
JOYSTICK DE DOIGT À VALEUR D'ANGLE VERROUILLABLE

(43) Date of publication of application: 13.08.2025
(73) Proprietor: ELFATEK TEKNOLOJI ANONIM SIRKETI, 42050 Karatay/Konya (TR)
(72) Inventor: DÜZGÜN, Bahattin, 42050 Karatay/Konya (TR); CANAN, Süleyman, 42050 Karatay/Konya (TR); KARAGÖZLER, Kerim, 42050 Karatay/Konya (TR)
(74) Representative: 2s-ip Schramm Schneider Bertagnoll Patent- und Rechtsanwälte Part mbB
(86) International application number: PCT/TR2023/051861
(87) International publication number: WO 2025/144146

(56) References cited:
- EP-A1- 1 504 981
- CN-U- 216 817 271
- JP-A- 2006 155 228
- US-A1- 2011 148 667
- US-A1- 2014 214 273
- US-A1- 2021 340 728

## Description

### TECHNICAL FIELD

The invention is related to a joystick used to facilitate movement and control of industrial machinery and vehicles, allowing control even when fingers are released. Referred to as the "Digital Detent Fingertip Joystick," the invention can be found in multiple instances within a system connected to a main controller.

### BACKGROUND

In some special machines and vehicles, the presence of an adjustment lever on joysticks allows them to remain in a non-centered position even when released. The known technique for these applications involves the mechanical locking of the adjustment lever at the limit of its movement axis. The adjustment lever, mechanically locked in place, continuously transmits the highest signal value produced by the sensor to the main unit. Thus, the requested continuous movement is repeated only at the highest value. The locked adjustment lever on the unit can be released from mechanical locking by applying force in the opposite direction with a finger, and a spring mechanism is used to return the adjustment lever to the center. In other words, there is no electronic locking at gradual or operator-desired points. The mentioned locking process is mechanical and is performed at the furthest point the lever can go.

### AIM OF THE INVENTION

One aim of the invention is to enable the control of machines and vehicles with multiple axes in various fields.

Another aim of the invention is to incorporate an adjustment lever on the joystick body, host a position reminder button on this adjustment lever, and include a warning light indicating whether the position reminder feature is active and at what level if it is active.

One aim of the invention is for the adjustment lever to be connected to the center of the body with a supporting surface, allowing it to pivot.

Another aim of the invention is for the adjustment lever to be able to rotate clockwise and counterclockwise on the body up to the limits.

Another aim of the invention is to include a sensor within the body, which also transmits the current position of the adjustment lever to the processor inside the body through signals. The processor controls the button on the adjustment lever and transmits the desired command to the main unit and the warning lights on the lever via signals.

Another aim of the invention is for the adjustment lever to incorporate a spring mechanism that allows it to return to the center even when its position is changed and then released.

Another aim of the invention is to include a button on the lever which activates the spring mechanism when the position of the adjustment lever is changed. The processor inside the body detects when the button is active and continues to transmit the position information from the sensor to the main unit, even after the adjustment lever has returned to the center. Additionally, the processor adjusts the brightness level, blinking interval, and colors of the warning lights on the adjustment lever to indicate the status of the feature to the user.

In the prior art, the adjustment lever can only continuously provide the highest value because of being able to be locked only at the movement limit. It is not possible for the joystick adjustment lever to remain locked at every intermediate value. Intermediate values cannot be transmitted to the main control unit continuously without applying force with the finger. The invention aims to transmit any desired value, including intermediate values, to the main control unit continuously without applying force with the finger, using one or more buttons and light feedback on the adjustment lever.

JP 2006 155228 A discloses a finger joystick.

### LIST OF FIGURES

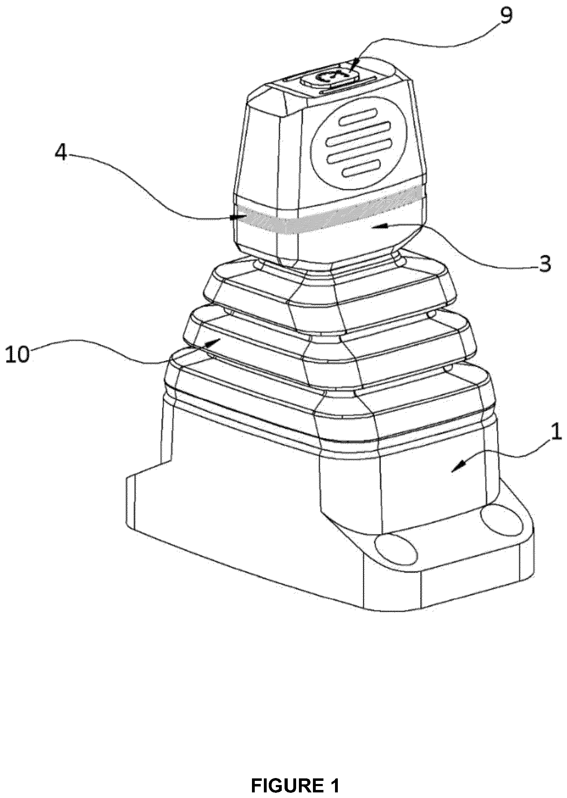

Figure 1. A perspective view of the joystick. It moves along a single axis, and the part from the adjustment lever to the body is isolated with a silicone bellows. The single axis movement occurs along the broad surfaces of the joystick and is in the forward-backward direction.
Figure2. A perspective and exploded view of the invention without the silicone bellows. Function-assigned buttons and warning lights are visible on this figure.
Figure 3. An illustration of the adjustment lever included in the invention, showing the center (a) and the maximum angle (b) it can achieve in a single axis movement.

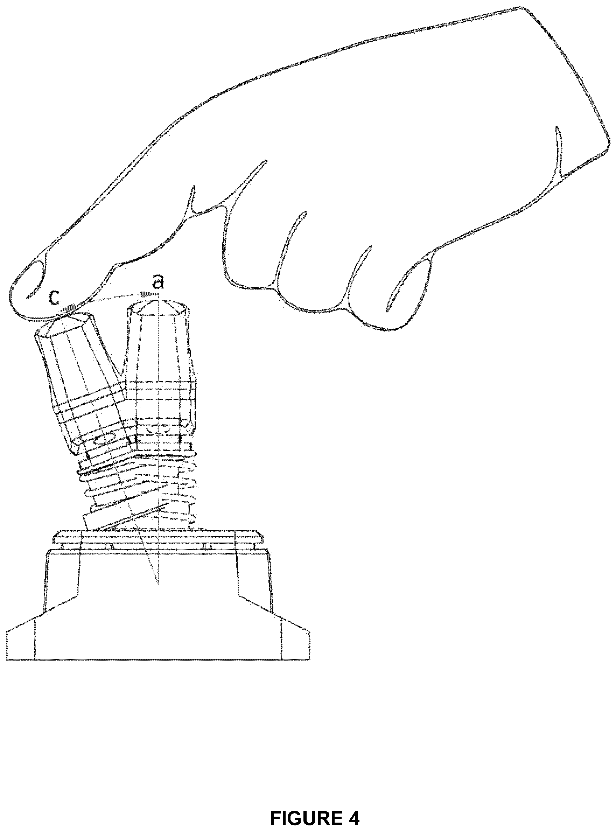

Figure 4. A view showing the use of the button on the adjustment lever when it is at any intermediate value (c).
Correspondence of the numbers given in the figures:
1. Body
2. Spring mechanism
3. Adjustment Lever
   3.1 Shaft
4. Diffuser
5. Warning light
6. Printed Circuit Board
7. Button
8. Upper portion
9. Button cap
10. Silicon rubber bellows
11.Sensor
12. Processor

a. Adjustment lever center position
b. Limit position of the movement of the Adjustment lever
c. The position of the adjustment lever at any angle between (a) and (b)

### DETAILED DESCRIPTION OF THE INVENTION

The invention comprises, for industrial products, an adjustment lever (3) designed to be moved with a finger, an upper portion (8) of the adjustment lever (3) having a support area for the finger, attached to the adjustment lever (3) via a screw, and a unit body (1) comprising the adjustment lever (3) connected to a rotation axis allowing angular movement along a single axis at its center.

The adjustment lever (3) located on the unit body (1) moves within a limited angular range (b) along a single axis due to the force applied by the finger. The adjustment lever (3), connected to the unit body (1) via a shaft (3.1), can move forward and backward along the single axis by rotating around a hinge located inside the unit body (not shown in the figures). When released, the adjustment lever (3) returns to the center (a) with a spring mechanism (2) positioned perpendicular to the unit body (1) on the unit body (1). The natural position of the spring mechanism (2) is, as stated above, perpendicular to the unit body (1). The spring mechanism (2) has the ability to bend along the axis on which the adjustment lever (3) will move. Thus, it enables the adjustment lever (3) to move along a single axis and return to its upright position when released, ensuring the adjustment lever (3) returns to its zero position.

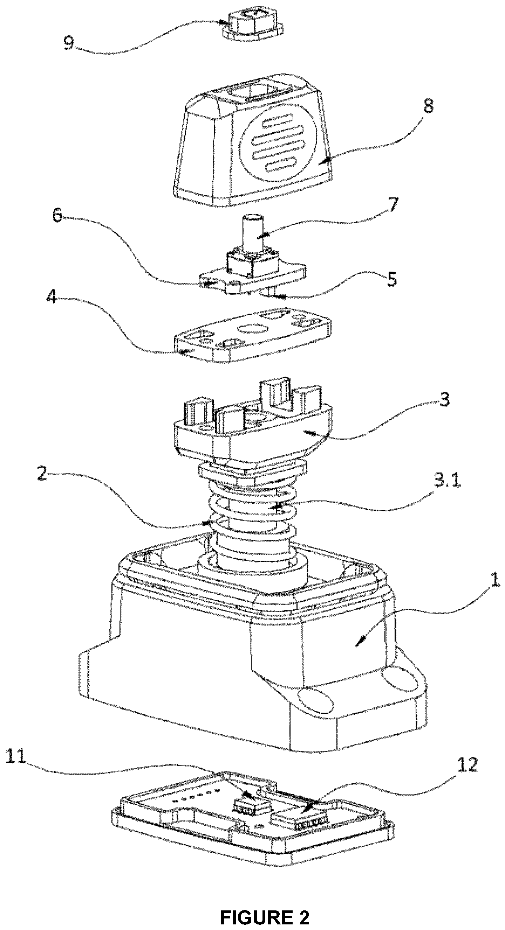

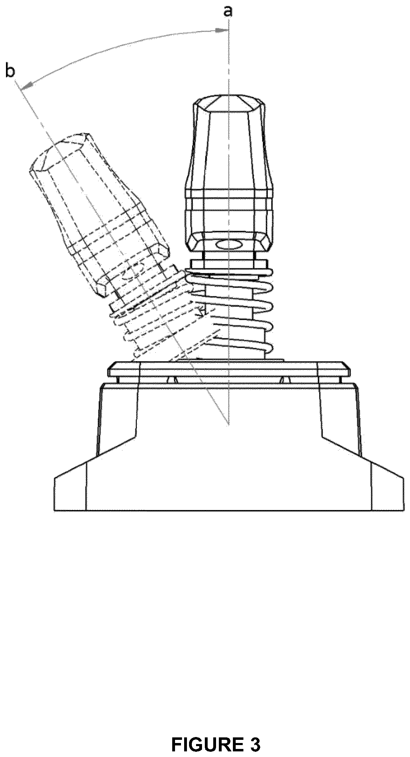

The unit body (1) contains a lower cover (Figure 2). On this cover, there is a sensor (11) that communicates to the processor (12) inside the unit body (1) with different signal values for each angle, indicating the angle of the adjustment lever (3) with angular movement from the center "a" point by the amount of deviation distance shown as "b" in Figure 3. The sensor (11) measures each inclination of the adjustment lever (3) at the angle indicated as "b", assuming the upright position of the adjustment lever (3) as 0 degrees. For each measured different angle value, a distinct signal is generated. Thus, the processor (12) processes these assigned different signal values for each angle and sends them to the main control unit to which the joystick is connected.

The spring mechanism (2) located between the adjustment lever (3) and the unit body (1) is protected from external factors by a silicone rubber bellows (10). This extends the lifespan of the spring mechanism (2).

The locking of the angle determined by the adjustment lever (3) is activated by pressing the button cap (9) on the button (7) for all values (c) within the range between the limit position (b) and the center value (a). Pressing the button (7) once, the processor (12) records the position information (c) from the sensor (11) into its memory and detects that this value is continuously requested by the user. Subsequently, even if the adjustment lever (3) is released and returns to the center (a) position, the processor (12) continues to send the position (c) signal stored in the main unit connected to the joystick. In this case, the processor (12) also operates at least one warning light (5) on the electronic printed circuit board (6) using different methods such as changing colors, intermittent blinking, and adjusting light brightness. The warning light (5) providing illumination creates a homogeneous light field by reflecting off the diffuser (4) located between the upper portion (8) of the adjustment lever (3) and the adjustment lever (3), facilitating visibility for the operator.

While the adjustment lever (3) is in the center (a) position and the processor (12) sends the position information (c) recorded to the main unit to which the joystick is connected, the button cap (9) on the adjustment lever (3) is pressed once, and the button (7) to which the cap (9) is attached sends a signal to the processor again. In this case, the processor (12) detects that the continuously sent value is intended to be canceled and ceases to transmit the recorded position (c) information to the main unit, turns off the warning lights (5), and returns to its first situation to send variable position information coming from the sensor (11). Another method of disabling the feature is to change the center position of the adjustment lever (3) and moving it to any other position, while the feature is active and the adjustment lever (3) is at position (a).

## Claims

1. A finger joystick capable of angular movement along a single axis with an adjustable angular value, comprising an adjustment lever (3) designed to be moved by a finger, an upper portion (8) of the adjustment lever (3) connected to the adjustment lever (3) having a support area for the finger, a unit body (1) of the adjustment lever (3) connected to a rotation axis allowing angular movement along a single axis at its center, a spring mechanism (2) on the unit body (1) to return the adjustment lever (3) to center (a) position when released, an electronic printed circuit board (6) and at least one indicator light (5) mounted thereon, a button cap (9) with a button (7), a processor (12), and a sensor (11);
- wherein the adjustment lever (3) being connected to a shaft (3.1) within the unit body (1) by means of a hinge allowing limited forward and backward movement within an angular range (b) due to the force applied by the finger along the single axis,
- wherein the natural position of the spring mechanism (2) being perpendicular to the unit body (1),
- wherein the sensor (11) being configured to transmit position information (c) to the processor (12) with different signal values for each angle, determined by the angular movement of the adjustment lever (3) with an angle amount designated as "b" from the center point "a" for each angle,
- wherein the processor (12) being configured to record the position information (c) upon a single press of the button cap (9) on the button (7), process assigned different signal values for each angle, and transmit them to the main control unit to which the joystick is connected, and control the electronic printed circuit board (6) to operate with at least one indicator light (5) through different methods such as changing colors, intermittent flashing, and adjusting brightness.

2. The finger joystick capable of angular movement along a single axis with an adjustable angular value according to claim 1, **characterized by** comprising a silicone rubber bellows (10) between the adjustment lever (3) and the unit body (1) to protect the spring mechanism (2) from external factors.

3. The finger joystick capable of angular movement along a single axis with an adjustable angular value according to claim 1, **characterized by** comprising a diffuser (4) between the upper portion (8) of the adjustment lever (3) and the adjustment lever (3) to create a homogeneous light field, facilitating the reflection of the warning light (5) for easy visibility by the operator.

4. The finger joystick capable of angular movement along a single axis with an adjustable angular value according to claim 1, **characterized by** comprising the processor (12) that continues to send the recorded position (c) signal to the main unit to which the joystick is connected, even if the adjustment lever (3) is released and returns to the center (a) position.

5. The finger joystick capable of angular movement along a single axis with an adjustable angular value according to claim 1, **characterized by** comprising the processor (12) that, while the adjustment lever (3) is in the center (a) position and sending the position information (c) recorded by the processor to the main unit to which the joystick is connected, ceases to transmit the recorded position (c) information to the main unit and turns off the warning lights (5) upon a single press of the button cap (9) on the adjustment lever (3).

6. The finger joystick capable of angular movement along a single axis with an adjustable angular value according to claim 1, **characterized by** comprising the processor (12) that, while the adjustment lever (3) is in the center (a) position and sending the position information (c) recorded by the processor to the main unit to which the joystick is connected, ceases to transmit the recorded position (c) information to the main unit and turns off the warning lights (5) upon the adjustment lever (3) being moved from the center position and placed in any other position.

## Patentansprüche

1. Ein Finger-Joystick, der eine Winkelbewegung entlang einer einzigen Achse mit einem einstellbaren Winkelwert ermöglicht, umfassend einen Einstellhebel (3), der dazu ausgelegt ist, mit einem Finger bewegt zu werden, einen oberen Abschnitt (8) des Einstellhebels (3), der mit dem Einstellhebel (3) verbunden ist und eine Auflagefläche für den Finger aufweist, Gehäuse (1) des Einstellhebels (3), das mit einer Drehachse verbunden ist, die eine Winkelbewegung entlang einer einzigen Achse in ihrer Mitte ermöglicht, einen Federmechanismus (2) am Gehäuse (1), um den Einstellhebel (3) bei Loslassen in eine Mittelstellung (a) zurückzuführen, eine elektronische Leiterplatte (6) und mindestens eine darauf montierte Kontrollleuchte (5), eine Tastenkappe (9) mit einer Taste (7), einen Prozessor (12) und einen Sensor (11);
- wobei der Einstellhebel (3) über ein Scharnier mit einer Welle (3.1) innerhalb des Gehäuses (1) verbunden ist, das aufgrund der vom Finger entlang der einzigen Achse ausgeübten Kraft eine begrenzte Vorwärtsund Rückwärtsbewegung innerhalb eines Winkelbereichs (b) ermöglicht,
- wobei die natürliche Position des Federmechanismus (2) senkrecht zum Gehäuse (1) ist,
- wobei der Sensor (11) so ausgelegt ist, dass er Positionsinformationen (c) mit unterschiedlichen Signalwerten für jeden Winkel an den Prozessor (12) überträgt, die durch die Winkelbewegung des Einstellhebels (3) um einen als "b" bezeichneten Winkelbetrag vom Mittelpunkt "a" für jeden Winkel bestimmt werden,
- wobei der Prozessor (12) so ausgelegt ist, dass er die Positionsinformationen (c) bei einem einzigen Druck auf die Tastenkappe (9) der Taste (7) erfasst, die für jeden Winkel zugewiesenen unterschiedlichen Signalwerte zu verarbeiten und an die Hauptsteuereinheit zu übertragen, mit der der Joystick verbunden ist, sowie die elektronische Leiterplatte (6) so zu steuern, dass sie mit mindestens einer Anzeigeleuchte (5) durch verschiedene Verfahren wie Farbwechsel, intermittierendes Blinken und Helligkeitsanpassung arbeitet.

2. Der Finger-Joystick, der eine Winkelbewegung entlang einer einzigen Achse mit einem einstellbaren Winkelwert ermöglicht, gemäß Anspruch 1, **dadurch gekennzeichnet, dass** er einen Silikonkautschuk-Faltenbalg (10) zwischen dem Einstellhebel (3) und dem Gehäuse (1) umfasst, um den Federmechanismus (2) vor äußeren Einflüssen zu schützen.

3. Der Finger-Joystick, der eine Winkelbewegung entlang einer einzigen Achse mit einem einstellbaren Winkelwert ermöglicht, gemäß Anspruch 1, **dadurch gekennzeichnet, dass** er einen Diffusor (4) zwischen dem oberen Abschnitt (8) des Einstellhebels (3) und dem Einstellhebel (3) umfasst, um ein homogenes Lichtfeld zu erzeugen, das die Reflexion der Warnleuchte (5) erleichtert und so eine gute Sichtbarkeit für den Bediener gewährleistet.

4. Der Finger-Joystick, der eine Winkelbewegung entlang einer einzigen Achse mit einem einstellbaren Winkelwert gemäß Anspruch 1 ausführen kann, **dadurch gekennzeichnet, dass** er den Prozessor (12) umfasst, der das Signal der erfassten Position (c) weiterhin an die Haupteinheit sendet, mit der der Joystick verbunden ist, selbst wenn der Einstellhebel (3) losgelassen wird und in die Mittelstellung (a) zurückkehrt.

5. Der Finger-Joystick, der eine Winkelbewegung entlang einer einzigen Achse mit einem einstellbaren Winkelwert gemäß Anspruch 1 ermöglicht, **dadurch gekennzeichnet, dass** er den Prozessor (12) umfasst, der, während sich der Einstellhebel (3) in der Mittelstellung (a) befindet und die vom Prozessor erfasste Positionsinformation (c) an die Haupteinheit sendet, mit der der Joystick verbunden ist, die Übertragung der erfassten Positionsinformationen (c) an die Haupteinheit unterbricht und die Warnleuchten (5) durch einmaliges Drücken der Tastenkappe (9) am Einstellhebel (3) ausschaltet.

6. Der Finger-Joystick, der eine Winkelbewegung entlang einer einzigen Achse mit einem einstellbaren Winkelwert gemäß Anspruch 1 ermöglicht, **dadurch gekennzeichnet, dass** er den Prozessor (12) umfasst, der, während sich der Einstellhebel (3) in der Mittelstellung (a) befindet und die vom Prozessor erfasste Positionsinformation (c) an die Haupteinheit sendet, mit der der Joystick verbunden ist, die Übertragung der aufgezeichneten Positionsinformationen (c) an die Haupteinheit unterbricht und die Warnleuchten (5) ausschaltet, sobald der Einstellhebel (3) aus der Mittelstellung bewegt und in eine beliebige andere Position gebracht wird.

## Revendications

1. Joystick à doigt capable d'un mouvement angulaire le long d'un seul axe avec une valeur angulaire réglable, comprenant un levier de réglage (3) conçu pour être actionné par un doigt, une partie supérieure (8) du levier de réglage (3) reliée à ce dernier et comportant une surface d'appui pour le doigt, un corps (1) du levier de réglage (3) relié à un axe de rotation permettant un mouvement angulaire selon un seul axe en son centre, un mécanisme à ressort (2) sur le corps (1) pour ramener le levier de réglage (3) en position centrale (a) lorsqu'il est relâché, une carte de circuit imprimé électronique (6) et au moins un voyant lumineux (5) monté sur celle-ci, un capuchon de bouton (9) avec un bouton (7), un processeur (12) et un capteur (11) ;
- dans lequel le levier de réglage (3) est relié à un arbre (3.1) à l'intérieur du corps (1) au moyen d'une charnière permettant un mouvement limité vers l'avant et vers l'arrière dans une plage angulaire (b) sous l'effet de la force appliquée par le doigt le long de l'axe unique,
- la position naturelle du mécanisme à ressort (2) étant perpendiculaire au corps (1),
- dans lequel le capteur (11) est configuré pour transmettre des informations de position (c) au processeur (12) avec des valeurs de signal différentes pour chaque angle, déterminées par le mouvement angulaire du levier de réglage (3) d'un angle désigné par « b » à partir du point central « a » pour chaque angle,
- le processeur (12) étant configuré pour enregistrer les informations de position (c) lors d'une simple pression sur le capuchon (9) du bouton (7), de traiter les différentes valeurs de signal attribuées à chaque angle, de les transmettre à l'unité de commande principale à laquelle le joystick est connecté, et de commander la carte de circuit imprimé électronique (6) afin qu'elle actionne au moins un voyant lumineux (5) par différents moyens, tels que le changement de couleur, le clignotement intermittent et le réglage de la luminosité.

2. Le joystick à doigt capable d'un mouvement angulaire le long d'un seul axe avec une valeur angulaire réglable selon la revendication 1, **caractérisé en ce qu'**il comprend un soufflet en caoutchouc silicone (10) entre le levier de réglage (3) et le corps (1) afin de protéger le mécanisme à ressort (2) contre les facteurs externes.

3. Le joystick à doigt capable d'un mouvement angulaire le long d'un seul axe avec une valeur angulaire réglable selon la revendication 1, **caractérisé en ce qu'**il comprend un diffuseur à « » (4) entre la partie supérieure (8) du levier de réglage (3) et le levier de réglage (3) afin de créer un champ lumineux homogène, facilitant la réflexion du voyant d'avertissement (5) pour une meilleure visibilité par l'opérateur.

4. Le joystick à doigt capable d'un mouvement angulaire le long d'un seul axe avec une valeur angulaire réglable selon la revendication 1, **caractérisé en ce qu'**il comprend un processeur (12) qui continue d'envoyer le signal de position enregistrée (c) à l'unité principale à laquelle le joystick est connecté, même si le levier de réglage (3) est relâché et revient en position centrale (a).

5. Joystick à doigt capable d'un mouvement angulaire le long d'un seul axe avec une valeur angulaire réglable selon la revendication 1, **caractérisé en ce qu'**il comprend le processeur (12) qui, lorsque le levier de réglage (3) se trouve en position centrale (a) et envoie les informations de position (c) enregistrées par le processeur à l'unité principale à laquelle le joystick est connecté, cesse de transmettre les informations de position (c) enregistrées à l'unité principale et éteint les voyants d'avertissement (5) dès une simple pression sur le capuchon de bouton (9) situé sur le levier de réglage (3).

6. Le joystick à doigt capable d'un mouvement angulaire le long d'un seul axe avec une valeur angulaire réglable selon la revendication 1, **caractérisé en ce qu'**il comprend le processeur (12) qui, lorsque le levier de réglage (3) est en position centrale (a) et envoie les informations de position (c) enregistrées par le processeur à l'unité principale à laquelle le joystick est connecté, cesse de transmettre les informations de position (c) enregistrées à l'unité principale et éteint les voyants d'avertissement (5) dès que le levier de réglage (3) est déplacé de la position centrale et placé dans n'importe quelle autre position.
